# EUROPÄISCHE PATENTSCHRIFT

(11) **EP 1 342 403 B1**
(45) Veröffentlichungstag und Bekanntmachung des Hinweises auf die Patenterteilung: **18.07.2007**
(21) Anmeldenummer: 03003804.6
(22) Anmeldetag: 20.02.2003
(51) Int. Cl.: A01F 29/10

(54) **Federsystem für die oberen Einzugswalzen in Häckslern**
Springsystem for upper feed rolls of a forage harvester
Système à ressort pour rouleaux d'amenée supérieurs de récolteuses-hacheuses

(30) Priorität: 09.03.2002 DE 10210437
(43) Veröffentlichungstag der Anmeldung: 10.09.2003
(73) Patentinhaber: CNH Belgium N.V., 8210 Zedelgem (BE)
(72) Erfinder: Müller, Ralf, 01796 Dohma (DE); Depestel, Bernard E.D., 8730 Oedelem (BE); Desnjider, Dirk J., 9032 Wondelgem (BE); Teetaert, Pierre E., 8211 Aartrijke (BE)
(74) Vertreter: Feldkamp, Rainer

(56) Entgegenhaltungen:
- EP-A- 0 797 914
- EP-A- 0 861 581
- EP-A- 0 872 171
- DE-A- 2 609 272
- US-A1- 2001 037 638

## Beschreibung

Die Erfindung betrifft ein Federsystem für die oberen Einzugswalzen in Häckslem, insbesondere in einer Einzugsvorrichtung selbstfahrender Feldhäcksler, nach den Merkmalen im Oberbegriff des Patentanspruchs 1.

Derartige Federsysteme sind in Einzugsvorrichtungen für Häcksler anzutreffen, die in der überwiegenden Anzahl heute mit zwei im Einzugsgehäuse fest gelagerten unteren Einzugswalzen und zwei mit diesen zusammenwirkenden oberen Einzugswalzen ausgestattet sind. Die nachfolgend als Vorpreßwalze und Preßwalze bezeichneten oberen Einzugswalzen sind im Einzugsgehäuse höhenbeweglich gelagert, um beim Einzug von Erntegut nach oben ausweichen zu können. Das Federsystem hat dabei die Aufgabe, die Vorpreß- und die Preßwalze mit einer definierten Walzenkraft zu beaufschlagen, damit die im Zusammenwirken mit den unteren Einzugswalzen das Emtegut einerseits beim Einzug vorverdichten können und andererseits mit Hilfe dieser Walzenkraft den Einzug des Emtegutes und dessen Transport zur Häckseltrommel überhaupt erst möglich machen.

Durch die in den letzten Jahren geforderte Leistungssteigerung bei Feldhäckslern ergeben sich an deren Einzugsvorrichtungen immer höhere Anforderungen, was einmal zu immer breiteren Einzugsvorrichtungen und höheren Aushubhöhen der Vorpreß- und der Preßwalze und zur weiteren Erhöhung der Einzugsgeschwindigkeit des Erntegutes geführt hat. Diese höheren Anforderungen sind nur dann zu erfüllen, wenn die durch das Federsystem über die Vorpreß- und die Preßwalze auf das Erntegut ausgeübten Walzenkräfte wenigstens so groß sind, daß das Erntegut von der Häckseltrommel nicht eingezogen werden kann. Sie dürfen aber andererseits auch nicht zu groß sein, damit nicht gleich jede größere Erntegutansammlung zu Verstopfungen in der Einzugsvorrichtung führt. Die Walzenkräfte müssen mit wachsender Schichtdicke des Erntegutes infolge der Reibung des Erntegutes an den Seitenwänden der Einzugsvorrichtung deutlich zunehmen. Im Bereich geringer Schichtdicke müssen sie dagegen klein gehalten werden, damit insbesondere bei der Maisernte die Körner nicht durch zu hohe Walzenkräfte aus den Kolben herausgeschlagen werden, was sich bei großen Häcksellängen besonders negativ auswirkt. Schließlich ist noch darauf hinzuweisen, daß die Walzenkräfte nicht nur vom Federsystem allein aufgebracht werden, sondern auch noch von den Reaktionskräften aus den Antriebsmomenten der Vorpreß- und Preßwalze, deren Walzengewichten und den Reibungskräften beim Ausheben bzw. Absenken abhängig sind. Der größte Anteil kommt jedoch vom Federsystem, gefolgt von den Reaktionskräften. Die übrigen Größen sind praktisch zu vernachlässigen.

Für die Erfüllung dieser Anforderungen ist bereits eine Vielzahl von Federsystemen bekannt geworden. Eins davon ist im Prospekt der deutschen Firma CLAAS für die Feldhäcksler- Baureihe "Jaguar 880 bis 820" mit dem Druckvermerk "11/20 (Rihn) deutsch 70/CVG 1106.1" zu sehen. Hier ist auf die Wellen der Vorpreß- und der Preßwalze auf der in Fahrtrichtung des Feldhäckslers gesehenen rechten Seite ein Getriebe aufgesteckt, das vom mit einer Konsole ausgestattet ist, an der zwei ineinander gesteckte Zugfedern angreifen. Deren Anhängepunkt liegt deutlich vor der Welle der Vorpreßwalze. Eine einzelne weitere Zugfeder greift von unten am Getriebe etwa in der Mitte zwischen der Vorpreß- und der Preßwalze an. Auf der anderen Seite ist die Anordnung der Zugfedern ähnlich, nur aus Platzgründen befinden die sich etwas weiter oben und anstelle des Getriebes greifen die Zugfedern an der Schwinge zwischen der Vorpreß- und der Preßwalze an. Zur Dämpfung unerwünschter Schwingungen sind auf beiden Seiten des Federsystems zwei Stoßdämpfer angebracht.

Nachteilig an diesem Federsystem ist, daß die Unterschiede in den Walzenkräften bei einer dünnen und einer dicken Emtegutschicht nicht groß genug sind, so daß entweder bei einer zu gering eingestellten Walzenkraft das Erntegut mit zunehmender Schichtdicke immer schlechter gefördert wird oder im umgekehrten Fall die Körner aus den Kolben schon vor der Häckseltrommel herausgeschlagen werden. Durch die geschilderte Lage der Anhängepunkte der Zugfedern ist einmal zu bemängeln, daß jede Bewegung der Vorpreßwalze die Größe der Walzenkraft der Preßwalze mit verändert und umgekehrt, wodurch sich beide Walzenkräfte Undefiniert gestalten. Diese Anhängung führt zum anderen auch zu einer schwingenden Bewegung der Vorpreß- und der Preßwalze um den jeweiligen Anhängepunkt der Zugfedern, so daß die vorstehend erwähnten Stoßdämpfer notwendig wurden, die einen Kosten erhöhenden Faktor darstellen. Schließlich ist an diesem Federsystem noch von Nachteil, daß die Zugfedern und die unteren Anschläge der Vorpreß- und der Preßwalze in einem sehr schmutzgefährdeten Bereich liegen, so daß die Zugfedern gar nicht mehr auf ihre Ausgangslänge zurückgehen können und auf den unteren Anschlägen sich eine störende Erntegutmenge ablagert. Die Folge davon ist eine eingeschränkte Förderung des Erntegutes bei einer geringen Schichtdicke.

Eine zweite Ausführungsvariante für ein Federsystem an einer Einzugsvorrichtung für Feldhäcksler ist mit der EP 0 797 914 B1 und als Ergänzung dazu im zu diesem Feldhäcksler gehörenden Prospekt mit dem Druckvermerk "62027/D00 - Printed in Italy - 12/96" bekannt geworden, bei der ebenfalls wie bei CLAAS auf die Wellen der Vorpreß- und der Preßwalze ein Getriebe aufgesteckt ist. Nahezu mittig am Getriebe bzw. an der Schwinge zwischen der Vorpreßwalze und der Preßwalze auf der linken Seite befindet sich ein Gelenkpunkt, an dem eine aufwärts ragende Koppel gelenkig befestigt ist, deren oberes Ende ebenfalls gelenkig mit einem Schwenkhebel verbunden ist, dessen anderes Ende in einem am Gehäuse der Einzugsvorrichtung befestigten Lager endet. In eine nach vorn ragende Anschlußlasche an der Koppel ist eine Zugfeder mit ihrem oberen Ende eingehängt und mit dem unteren Ende vorn am Gehäuse der Einzugsvorrichtung angebracht. Da dieses Federsystem die gleichen Nachteile wie das vorstehend beschriebene aufweist, soll an dieser Stelle zur Vermeidung von Wiederholungen nur auf diese verwiesen werden.

Eine dritte Möglichkeit für die Gestaltung eines Federsystems für die oberen Einzugswalzen ist in der EP 1 151 658 A1 aufgezeigt, deren einziger Unterschied zu den zwei vorstehend beschriebenen nur darin besteht, daß anstelle von zwei oberen Einzugswalzen hier drei Stück zum Einsatz kommen. Da die Anlenkung der zwei Zugfedern auf jeder Seite prinzipiell gleich wie bei den beiden vorstehend beschriebenen Federsystemen ausgeführt ist, gelten auch hier die gleichen Nachteile.

Im Prospekt der deutschen Firma MENGELE mit dem Druckvermerk "WA FITZEK/ 1/94 - 10" ist ein selbstfahrender Feldhäcksler vom Typ "MAM-MUT" mit Einzugsvorrichtung und Federsystem für die oberen Einzugswalzen abgebildet. Hier wird die auf die Vorpreßwalze wirkende Walzenkraft von zwei Zugfedern und die für die Preßwalze von je einer Zugfeder auf jeder Seite erzeugt. Obwohl hier die Zugrichtungen der Zugfedern auf den ersten Blick in der untersten Stellung der Vorpreß- und der Preßwalze etwas günstiger erscheinen als bei den drei vorstehenden Federsystemen ist dennoch zu bemängeln, daß sich bei unterschiedlich starken Auslenkungen die Lage der Zugfedern so weit von den Wellen der Walzen entfernt, daß jede Bewegung der Vorpreßwalze die Größe der Walzenkraft der Preßwalze mit verändert und umgekehrt. Ebenso verbleibt als Nachteil der zu geringe Unterschied in den Walzenkräften bei einer dünnen und einer dicken Erntegutschicht. Auch die Verschmutzung der Zugfedern und der unteren Anschläge ist hier unvermeidlich, so daß auch die damit im Zusammenhang stehenden Nachteile vorhanden sind.

Schließlich wäre noch auf die Einzugsvorrichtung mit oberen Einzugswalzen und einem Federsystem nach der DE-OS 26 09 272 hinzuweisen, bei der die Vorpreß- und die Preßwalze unabhängig voneinander in einer etwa vertikalen Ausrichtung in den Seitenwänden verschiebbar gelagert sind. Den Antrieb erhält jede der oberen Einzugswalzen separat über eine Gelenkwelle. Die Walzenkraft wird hier von Druckfedern erzeugt, die sich mit ihren oberen Enden am Gehäuse der Einzugsvorrichtung abstützen und mit den unteren Enden auf die Lager der Vorpreß- bzw. Preßwalze drücken. Zur Einstellung der Walzenkraft sind die oberen Enden in Gewindestücken aufgenommen, die mittels Gewindespindeln vertikal verstellbar sind. Obwohl durch die separaten Antriebe die daraus resultierenden Reaktionskräfte als Walzenkräfte praktisch ausgeschaltet sind, haften auch dieser Lösung noch einige Nachteile an. Das sind die auch hier zu geringen Unterschiede in den Walzenkräften bei unterschiedlichen Schichtdicken des Erntegutes und die Lage der unteren Anschläge für die Vorpreß- und Preßwalze im Bereich größter Verschmutzung. Des weiteren wird mit der Erhöhung der Walzenkraft der obere Anschlag nach unten verschoben, so daß die maximale Aushubhöhe dadurch eine Einschränkung erfährt. Außerdem kann es noch durch die Möglichkeit der völlig voneinander unabhängigen Bewegungen beider Walzen zu Verstopfungen in der Einzugsvorrichtung in dem Fall kommen, wenn die Vorpreßwalze bis zum oberen Anschlag ausgehoben ist und die Preßwalze unten steht.

Deshalb liegt der Erfindung die Aufgabe zugrunde, ein Federsystem für die oberen Einzugswalzen eines Häckslers zu schaffen, bei dem die Walzenkräfte mit wachsender Schichtdicke des Erntegutes deutlich zunehmen, wo die für die Vorpreßwalze vorgesehenen Federn über den gesamten Aushubweg nur diese und nicht die Preßwalze belasten und umgekehrt, dessen Federn sich in einem mit wenig Schmutz belasteten Raum befinden und bei dem die oberen und die unteren Anschläge der Walzen so ausgebildet und angeordnet sind, daß die Vorpreß- und die Preßwalze unabhängig von Schmutzablagerungen auch tatsächlich immer wieder in dieselbe Position kommt.

Diese Aufgabe wird gemäß der Erfindung durch die Merkmale des Patentanspruchs 1 gelöst, wobei in den Unteransprüche Merkmale aufgeführt sind, die diese Lösung in vorteilhafter Weise weiterentwickeln.

Dazu sind an einer Einzugsvorrichtung mit zwei oberen Einzugswalzen die vordere Vorpreßwalze und die nachgeordnete Preßwalze gegenüber zwei ortsfest im Gehäuse der Einzugsvorrichtung gelagerten unteren Einzugswalzen abstandsveränderlich angebracht, wodurch sie je nach Erntegutangebot zwischen ihrer untersten und ihrer obersten Position pendeln. Damit sie das Erntegut im Zusammenwirken mit den unteren Einzugswalzen einerseits gut vorverdichten und andererseits zur Häckseleinrichtung transportieren können, werden sie durch sich mit ihren oberen Enden am Gehäuse der Einzugsvorrichtung und mit ihren unteren Enden an den Lagerstellen der oberen Einzugswalzen abstützenden Druckfedern mit der dafür nötigen Walzenkraft beaufschlagt. Die Druckfedern werden dabei von Führungsstangen in Position gehalten, auf die sie konzentrisch aufgesteckt sind und deren obere Enden frei verschiebebeweglich am Gehäuse der Einzugsvorrichtung angebracht sind. Für die Vorpreßwalze kommen dabei zwei Druckfedern zur Anwendung, von denen eine bereits in der untersten Position der Vorpreßwalze auf sie eine geringe Walzenkraft ausübt. Die zweite Druckfeder bleibt über das erste Stück ihres Aushubweges aus der untersten Position heraus wirkungslos und schlägt erst später mit ihrem oberen Ende am Gehäuse der Einzugsvorrichtung an, wodurch sich aber dann ihre Walzenkräfte zu einer sehr großen Walzenkraft addieren. Durch diese hohe Walzenkraft ist es problemlos möglich, die aus den Antriebsmomenten der oberen Walzen entstehenden Reaktionskräfte auf die Vorpreßwalze, die bei einer entsprechenden Antriebsführung die Vorpreßwalze entlasten, ohne negative Einflüsse auf das Vorverdichten und den Transport an dieser Stelle ohne weiteres auszuschalten. Die Walzenkraft für die Preßwalze wird von einer Druckfeder erzeugt, die schon in deren untersten Position unter einer geringen Vorspannung steht und die über den gesamten Aushubweg der Preßwalze eine deutlich niedrigere Walzenkraft auf sie ausübt als die beiden Druckfedem auf die Vorpreßwalze. Bei der gleichen Antriebsführung wie vorstehend beschrieben belasten demzufolge die aus den Antriebsmomenten für die oberen Walzen entstehenden Reaktionskräfte die Preßwalze von oben und drücken sie auf das Emtegut, so daß es sogar möglich ist, auf diese Druckfeder ganz zu verzichten.

Vorsorglich wird an dieser Stelle darauf verwiesen, daß sämtlich Federsysteme für die Vorpreßwalze im Schutzbegehren der Erfindung liegen, die eine progressiv ansteigende Federkennlinie aufweisen und von der vorstehend beschriebenen Lösung in Einzelheiten abweichen. Darunter fallen auch speziell ausgebildete Einzeldruckfedern oder Systeme mit mehr als zwei Federn.

In einer vorteilhaften Ausgestaltung der Erfindung nach den Merkmalen des Unteranspruchs 2 ist durch die Ausbildung der bereits in der untersten Position der Vorpreßwalze unter einer gewissen Vorspannung stehenden Druckfeder als Außenfeder gewährleistet, daß die darin steckende zweite Druckfeder vor Schmutz geschützt liegt und daß sie dadurch auch keinen zusätzlichen Bauraum benötigt.

In einer weiteren bevorzugten Ausführungsform der Erfindung nach den Merkmalen des Unteranspruchs 3 ist durch die entgegengesetzte Wicklungsrichtung der Außenfeder zur Innenfeder gesichert, daß sie sich in keiner Position ineinander verhaken können.

Eine zweckmäßige Ausgestaltung der Erfindung wird nach den Merkmalen des Unteranspruchs 4 bezüglich der unteren Abstützung der Außenfeder und der Innenfeder möglichst nahe an der Mittelachse der Welle der Vorpreßwalze darin gesehen, daß dadurch die gemeinsame Walzenkraft auf direktem Wege und ausschließlich auf die Vorpreßwalze drückt. Durch die kürzere Innenfeder ist darüber hinaus zu verzeichnen, daß bei geringen Schichtdicken auch nur eine geringe Valzenkraft allein durch die Außenfeder auf das Erntegut ausgeübt wird, was völlig ausreichend ist und wodurch das Erntegut in keiner Weise beschädigt wird. Bei höheren Schichtdicken steht dagegen dann die sehr hohe gemeinsame Walzenkraft zur Verfügung, die in diesem Bereich des Aushubweges auch dringend gebraucht wird.

In Weiterbildung der Erfindung befinden sich nach den Merkmalen des Unteranspruchs 5 die unteren Anschläge zur Lagebegrenzung der Vorpreßwalze und der Preßwalze in ihren unteren Positionen oberhalb der oberen Abkantung des Gehäuses der Einzugsvorrichtung, wodurch beide Walzen an ihren Führungsstangen hängen und die unteren Anschläge selbst in einem relativ schmutzfreien Raum liegen. Etwaige Aufprallschläge aus einer schnellen Abwärtsbewegung der oberen Einzugswalzen werden durch Gummipuffer abgefedert.

In einer weiteren Ausführungsvariante der Erfindung nach den Merkmalen des Unteranspruchs 6 hat es sich bewährt, die oberen Anschläge zur Lagebegrenzung der Vorpreßwalze und der Preßwalze in ihren obersten Positionen durch die Führungsstangen selbst zu realisieren, indem die mit je einem Anschlagbund ausgestattet sind, die sich von unten an Zentrierscheiben unter der oberen Abkantung des Gehäuses der Einzugsvorrichtung anlegen.

Schließlich wird noch eine vorteilhafte Ausgestaltung der Erfindung nach den Merkmalen des Unteranspruchs 7 darin gesehen, daß bei einer in Schwingen gelagerten Preßwalze und sich daran nach vorn anschließenden Koppeln zur Lagerung der Vorpreßwalze eine Möglichkeit installiert ist, die den frei beweglichen Winkelbereich zwischen der Schwinge und der Koppel zur Vermeidung von Verstopfungen etwas einschränkt. Dadurch wird sichergestellt, daß die Preßwalze nicht in ihrer untersten Position verbleiben kann, wenn sich die Vorpreßwalze in ihrer obersten Position befindet und umgekehrt. Dazu ist seitlich an der Schwinge ein kurzes Formstück angebracht, das in eine längere Ausnehmung in der Koppel eingreift, wodurch ein oberer und ein unterer Anschlag entstanden ist.

Zusammenfassend stellen sich damit die Vorteile der Erfindung so dar, daß dieses Federsystem im Bereich kleiner Schichtdicken auf das Erntegut nur geringe Walzenkräfte ausübt und mit wachsender Schichtdicke die Walzenkräfte deutlich erhöht. Die Richtung der Walzenkräfte auf die Lagerstellen möglichst nahe der Mittelachsen der Wellen der Vorpreßwalze und der Preßwalze führen zu deren definierter Belastung ohne gegenseitige Beeinflussung. Durch die Lage der Druckfedern und der oberen und unteren Anschläge zur Begrenzung der Bewegungsfreiheit der oberen Einzugswalzen in ihrer obersten und untersten Position in einem weitestgehend schmutzfreien Raum ist deren unveränderte Lage über lange Zeit gesichert.

Die Erfindung soll nun anhand eines Ausführungsbeispieles näher erläutert werden, wobei die einzelnen Figuren zeigen:
- Fig. 1 :: eine perspektivische Ansicht von vom rechts auf die Einzugsvorrichtung mit nachgeordneter Häckseleinrichtung
- Fig. 2:: eine Seitenansicht auf die linke Seite der Einzugsvorrichtung
- Fig. 3:: die Vorpreßwalze ist in der obersten Position und die Preßwalze ist durch Koppel und Schwinge zwangsausgehoben

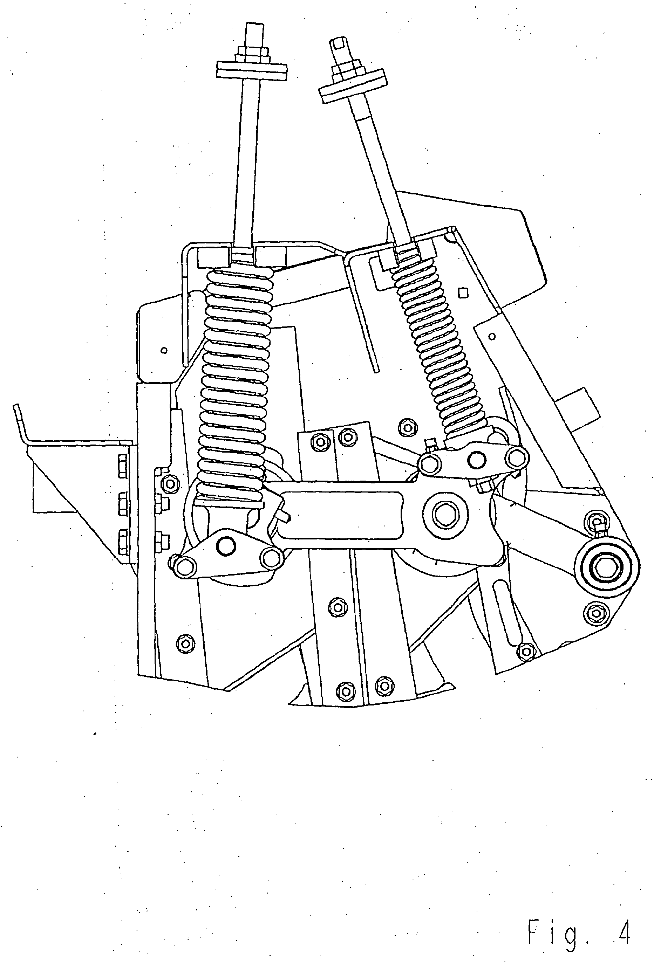

- Fig. 4:: die Vorpreßwalze und die Preßwalze befinden sich in der vom Erntegut ausgehobenen obersten Position
- Fig. 5:: ein Schnitt durch die Druckfedern an der Vorpreßwalze in deren unterster Position
- Fig. 6:: ein Schnitt durch die Druckfedern an der Vorpreßwalze in deren oberster Position
- Fig. 7:: ein Schnitt senkrecht zur Mittelachse der Welle der Preßwalze durch die Schwinge und die Koppel

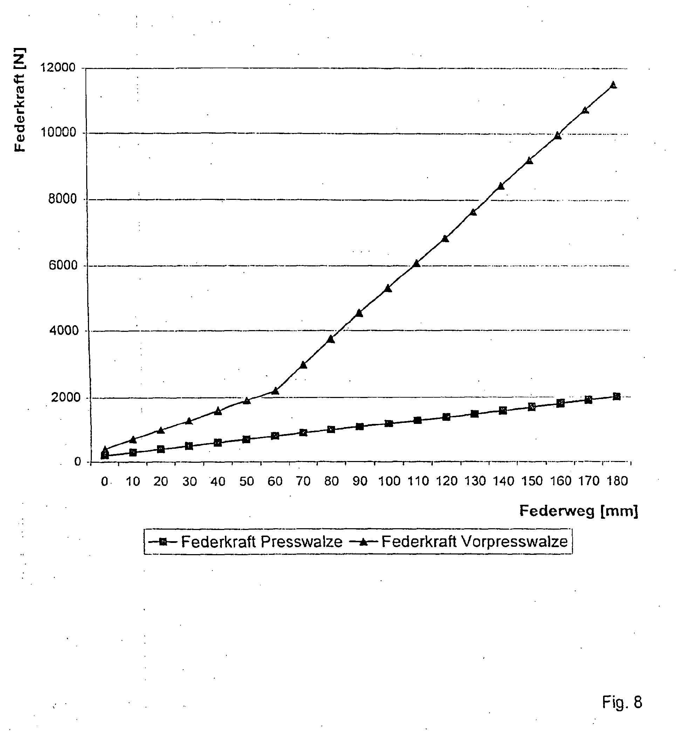

- Fig. 8:: zwei Federkennlinien für die Druckfedern der Vorpreßwalze und die Druckfeder der Preßwalze.

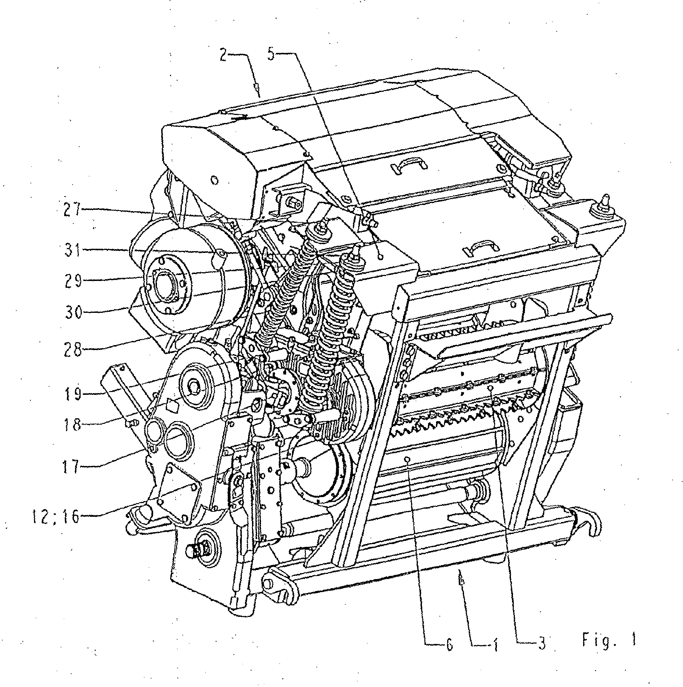

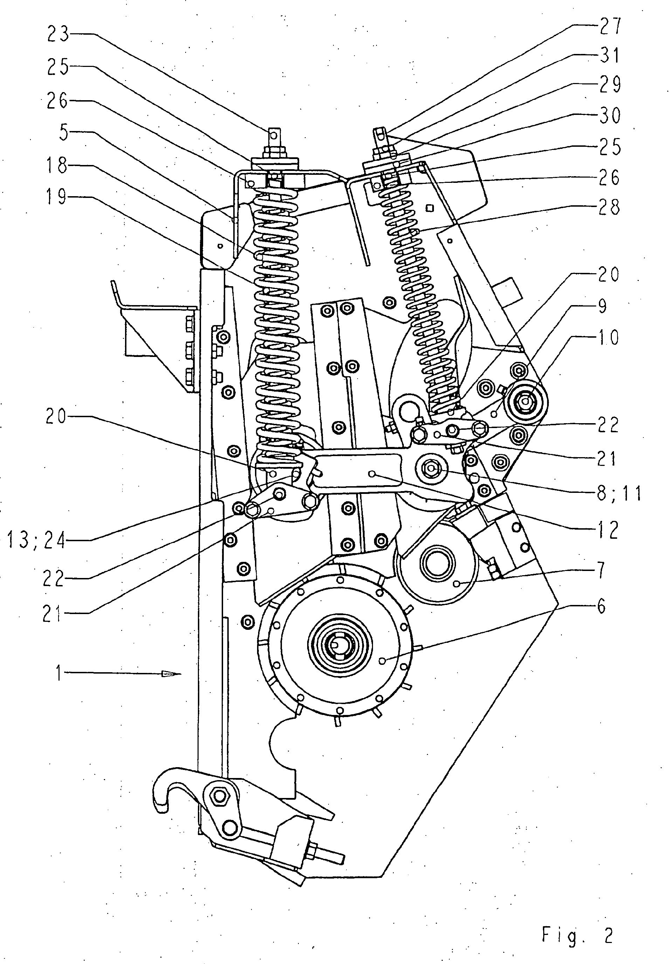

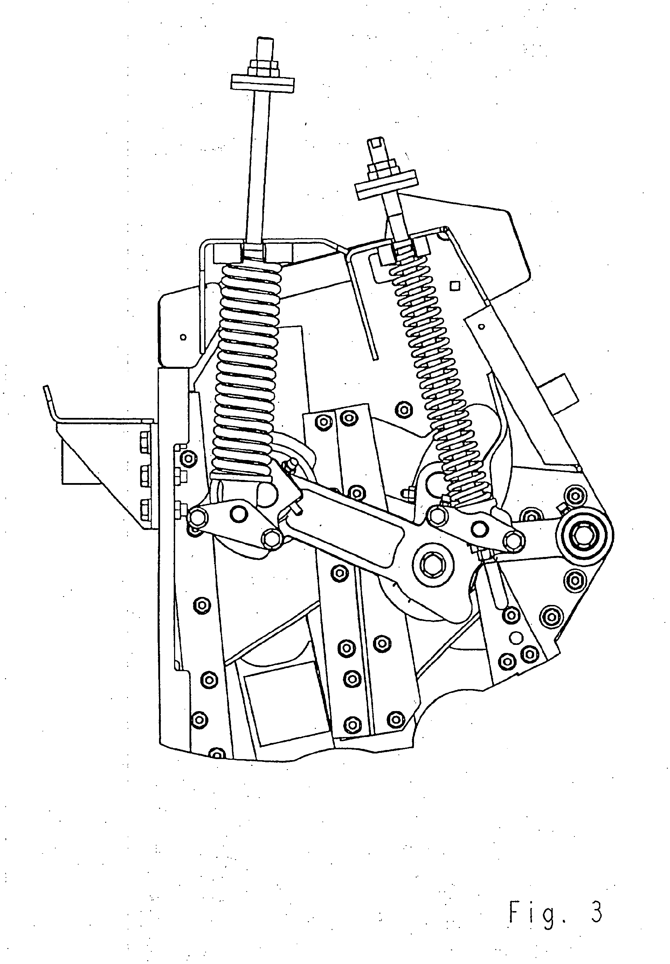

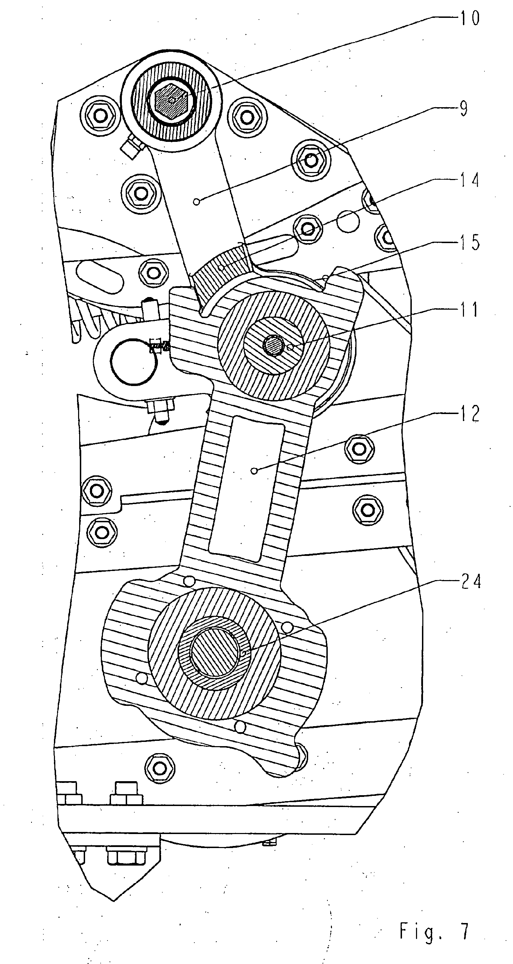

In Figur 1 ist die Einzugsvorrichtung 1 eines Feldhäckslers mit einer nachgeordneten Häckseleinrichtung 2 in einer perspektivischen Ansicht von vorn und rechts gezeigt, an der das erfindungsgemäße Federsystem realisiert ist. Figur 2 vermittelt eine direkte Seitenansicht auf dessen linke Seite ohne Häckseleinrichtung 2. Die Einzugsvorrichtung 1 weist zwei obere Einzugswalzen auf, die entsprechend der Flußrichtung des Erntegutes als Vorpreßwalze 3 und Preßwalze 4 bezeichnet werden. Diese sind abstandsveränderlich gegenüber der ortsfest im Gehäuse 5 der Einzugsvorrichtung 1 gelagerten vorderen unteren Einzugswalze 6 und der hinteren unteren Einzugswalze 7 angeordnet. Dazu ist die Preßwalze 4 mit ihren Lagerstellen 8 in den vorderen Enden von Schwingen 9 aufgenommen, die mit ihren hinteren Enden in am Gehäuse 5 der Einzugsvorrichtung 1 befestigten Schwenkbolzen 10 schwenkbeweglich gelagert sind. Beidseitig auf der Welle 11 der Preßwalze 4 ist je eine Koppel 12 mit ihrem hinteren Ende gelagert, in deren vorderen Enden sich die Lagerstellen 13 für die Vorpreßwalze 3 befinden. Ein kurzes an der Schwinge 9 befestigtes Formstück 14 steht dabei mit einer längeren in die Koppel 12 eingearbeiteten Ausnehmung 15 im Eingriff, was im Schnitt nach Figur 7 als Einzelheit dargestellt ist. Figur 3 zeigt, wie die Vorpreßwalze 3 durch Erntegut maximal ausgehoben ist und wie durch die Anlage des Formstückes 14 an einer Seite der Ausnehmung 15 die Preßwalze 4 ohne Einwirkung von Erntegut ein Stück mit ausgehoben wird. Auf der in Fährtrichtung gesehenen rechten Seite ist die Koppel 12 als Stirnradgetriebe 16 ausgebildet, dessen mittleres Stirnrad mit einer Gelenkwelle 17 in antriebsmäßiger Verbindung steht.

Das Federsystem für die oberen Einzugswalzen ist so aufgebaut, daß an den Lagerstellen 13 der Vorpreßwalze 3 eine als Außenfeder ausgebildete Druck-feder 18 angreift, in der eine als Innenfeder ausgebildete zweite Druckfeder 19 steckt. Beide Druckfedern 18;19 haben eine entgegengesetzte Wicklungsrichtung und stützen sich mit ihren unteren Enden auf einem Federfüß 20 ab, der um einen mittels einer Haltelasche 21 an der Koppel 12 befestigten Bolzen 22 verschwenkbeweglich angeordnet ist. Mit dem Federfüß 20 ist eine im wesentlichen in vertikaler Richtung zeigende Führungsstange 23 starr verbunden, zu der sich die Druckfedern 18;19 in einer konzentrischer Anordnung befinden. Die Längsachse der Führungsstange 23 liegt dabei sehr nahe der Mittelachse der Welle 24 der Vorpreßwalze 3 oder geht direkt durch sie hindurch.

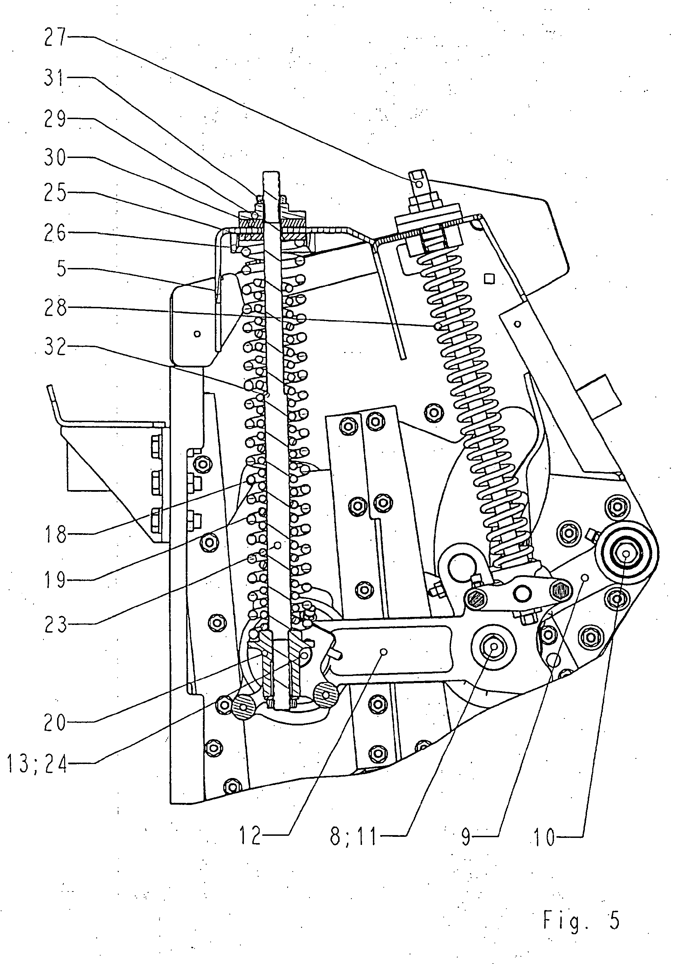

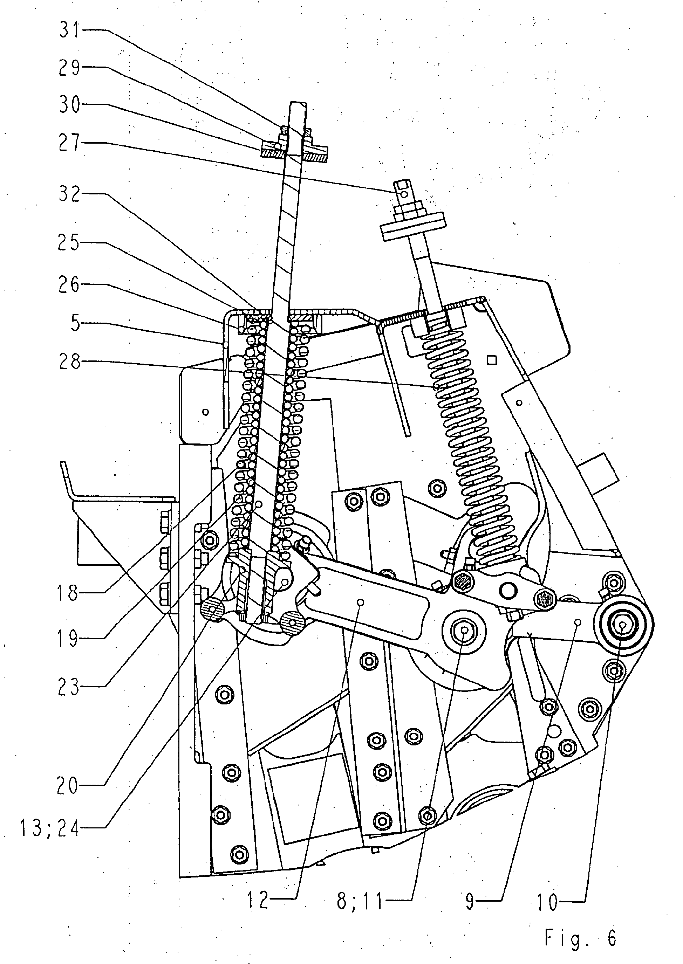

Die Längen der Außenfeder und der Innenfeder sind so gewählt, daß sich die Außenfeder in der untersten Position der Vorpreßwalze 3 mit ihrem oberen Ende bereits an der oberen Abkantung des Gehäuses 5 der Einzugsvorrichtung 1 abstützt, wogegen das obere Ende der Innenfeder bis dahin noch einen Freiraum hat. Zur Verdeutlichung der oberen Abstützung wird auf die Figuren 5 und 6 verwiesen. Hier ist zu sehen, daß zuerst die Außenfeder in der Figur 5 und später auch die Innenfeder wie in Figur 6 von unten an einer Zentrierscheibe 25 anliegen, die an die obere Abkantung des Gehäuses 5 angeschweißt und von einer nach unten offenen Hülse 26 umgeben ist. Die Zentrierscheibe 25 hat eine zentrische Bohrung, in der das obere Ende der Führungsstange 23 gleitend geführt ist.

Das die Preßwalze 4 mit einer Walzenkraft beaufschlagende Federsystem ist prinzipiell gleich wie das für die Vorpreßwalze 3 aufgebaut, nur mit dem Unterschied, daß um deren Führungsstange 27 nur eine einzelne Druckfeder 28 analog wie die als Außenfeder fungierende Druckfeder 18 für die Vorpreßwalze 3 herum gelegt ist, deren Walzenkraft im Vergleich zum Federpaket an der Vorpreßwalze 3 nur 15 bis 35 Prozent beträgt.

Die unteren Anschläge für die Lage der Vorpreßwalze 3 und der Preßwalze 4 in ihren untersten Positionen werden von an den Führungsstangen 23;27 befestigten Anschlagblechen 29 gebildet, die unter Zwischenschaltung von Gummipuffern 30 von oben auf der oberen Abkantung des Gehäuses 5 der Einzugsvorrichtung 1 anliegen. Deren Lage kann zur Veränderung der unteren Positionen der oberen Einzugswalzen durch Kontermuttern 31 verstellt werden.

Als obere Anschläge zur Begrenzung der Aushubwege der Vorpreßwalze 3 und der Preßwalze 4 in deren obersten Positionen dienen an den Führungsstangen 23;27 angebrachte Anschlagbunde 32, die von unten an den Zentrierscheiben 25 unter der oberen Abkantung des Gehäuses 5 der Einzugsvorrichtung 1 anliegen.

### Bezugszeichenaufstellung

- 1: Einzugsvorrichtung
- 2: Häckseleinrichtung
- 3: Vorpreßwalze
- 4: Preßwalze
- 5: Gehäuse
- 6: vordere untere Einzugswalze
- 7: hintere untere Einzugswalze
- 8: Lagerstelle
- 9: Schwinge
- 10: Schwenkbolzen
- 11: Welle
- 12: Koppel
- 13: Lagerstelle
- 14: Formstück
- 15: Ausnehmung
- 16: Stirnradgetriebe
- 17: Gelenkwelle
- 18: Druckfeder
- 19: Druckfeder
- 20: Federfuß
- 21: Haltelasche
- 22: Bolzen
- 23: Führungsstange
- 24: Welle
- 25: Zentrierscheibe

- 26: Hülse
- 27: Führungsstange
- 28: Druckfeder
- 29: Anschlagblech
- 30: Gummipuffer
- 31: Kontermutter
- 32: Anschlagbund

## Patentansprüche

1. Federsystem für die oberen Einzugswalzen, in Häckslern, insbesondere in einer Einzugsvorrichtung selbstfahrender Feldhäcksler,
◆ mit wenigstens einer Vorpreßwalze (3) und einer Preßwalze (4), die gegenüber zwei ortsfest im Gehäuse (5) der Einzugsvorrichtung (1) angeordneten unteren Einzugswalzen (6;7) abstandsveränderlich angebracht sind,
◆ wo die Vorpreßwalze (3) und die Preßwalze (4) mit Druckfedern, deren obere Enden sich am Gehäuse (5) der Einzugsvorrichtung (1) und deren untere Enden sich an den Lagerstellen (13;8) für die Vorpreßwalze (3) und die Preßwalze (4) abstützen, in Richtung der unteren Einzugswalzen (6;7) gedrückt werden,
◆ an dem die Druckfedern konzentrisch um Führungsstangen (23;27) angeordnet sind, die mit ihren unteren Enden mit den Lagerstellen (13;8) der Vorpreßwalze (3) und der Preßwalze (4) verbunden und mit ihren oberen Enden frei verschiebebeweglich am Gehäuse (5) der Einzugsvorrichtung (1) angebracht sind,
**dadurch gekennzeichnet, daß**
a) an jeder Lagerstelle (13) der Vorpreßwalze (3) in deren untersten Position eine bereits unter geringer Vorspannung stehende Druckfeder (18) angreift und erst ab einer etwas angehobenen Position der Vorpreßwalze (3) eine zweite Druckfeder (19) zur Erzeugung einer gemeinsamen Walzenkraft angeordnet ist,
b) an jeder Lagerstelle (8) der Preßwalze (4) nur eine Druckfeder (28) angreift, die in deren untersten Position ebenfalls unter einer geringen Vorspannung steht und deren Walzenkraft deutlich niedriger als die auf die Lagerstellen (13) der Vorpreßwalze (3) ausgeübte gemeinsame Walzenkraft ist.

2. Federsystem nach Anspruch 1, **dadurch gekennzeichnet, daß** die an jeder Lagerstelle (13) der Vorpreßwalze (3) in deren untersten Position angreifende und bereits unter einer geringen Vorspannung stehende Druckfeder (18) als Außenfeder ausgebildet ist, in der die zweite als Innenfeder ausgebildete Druckfeder (19) zur Erzeugung der gemeinsamen Walzenkraft steckt, wobei beide Druckfedern (18; 19) konzentrisch um die Führungsstange (23) angeordnet sind.

3. Federsystem nach den Ansprüchen 1 und 2, **dadurch gekennzeichnet, daß** die Außenfeder eine zur Innenfeder entgegengesetzte Wicklungsrichtung aufweist.

4. Federsystem nach den Ansprüchen 1 bis 3, **dadurch gekennzeichnet, daß** sich die unteren Enden der Außenfeder und der Innenfeder gemeinsam auf einem Federfuß (20) an der Lagerstelle (13) der Vorpreßwalze (3) nahe der Mittelachse ihrer Welle (24) abstützen und bei dem sich in der untersten Position der Vorpreßwalze (3) die Außenfeder mit ihrem oberen Ende bereits an der oberen Abkantung des Gehäuses (5) der Einzugsvorrichtung (1) abstützt und das obere Ende der Innenfeder bis zur auch für sie als Abstützung dienenden oberen Abkantung des Gehäuses (5) noch einen Freiraum aufweist.

5. Federsystem nach den Ansprüchen 1 bis 4, **dadurch gekennzeichnet, daß** die unteren Anschläge für die Lagebegrenzung der Vorpreßwalze (3) und der Preßwalze (4) in ihren untersten Positionen von an den Führungsstangen (23;27) befestigten Anschlagblechen (29) gebildet werden, die unter Zwischenschaltung von Gummipuffern (30) von oben auf der oberen Abkantung des Gehäuses (5) der Einzugsvorrichtung (1) anliegen.

6. Federsystem nach den Ansprüchen 1 bis 4, **dadurch gekennzeichnet, daß** die oberen Anschläge für die Lagebegrenzung der Vorpreßwalze (3) und der Preßwalze (4) in ihren obersten Positionen von einem Anschlagbund (29) an den Führungsstangen (23;27) gebildet werden, die von unten an den Zentrierscheiben (25) unter der oberen Abkantung des Gehäuses (5) der Einzugsvorrichtung (1) anliegen.

7. Federsystem nach Anspruch 1, **dadurch gekennzeichnet, daß** die Preßwalze (4) mit ihren Lagerstellen (8) in den vorderen Ende von Schwingen (9) aufgenommen ist, die mit ihren hinteren Enden in am Gehäuse (5) der Einzugsvorrichtung (1) befestigten Schwenkbolzen (10) schwenkbeweglich gelagert sind und daß beidseitig auf der Welle (11) der Preßwalze (4) je eine Koppel (12) mit ihrem hinteren Ende gelagert ist, in deren vorderen Enden sich die Lagerstellen (13) für die Vorpreßwalze (3) befinden, wobei die Koppel (12) gegenüber der Schwinge (9) nur in einem begrenzten Winkelbereich frei beweglich ist, indem ein kürzeres Formstück (14) an der Schwinge (9) in eine längere Ausnehmung (15) in der Koppel (12) eingreift.

## Claims

1. A spring system for the upper feeder rollers in forage harvesters, in particular in a feeder device on a self-propelled forage harvester,
◆ comprising at least one prepressing roller (3) and a pressing roller (4), which are arranged opposite two lower feeder rollers (6; 7) which are fitted at fixed positions in the casing (5) of the feeder device (1), so that the distance can be varied,
◆ where the prepressing roller (3) and the pressing roller (4) are pressed in the direction of the lower feeder rollers (6 ; 7) by compression springs, the upper ends of which abut on the casing (5) of the feeder device (1) and the lower ends of which abut on the bearing locations (13 ; 8) for the prepressing roller (3) and the pressing roller (4),
◆ on which the compression springs are arranged concentrically around guide rods (23 ; 27), which are connected with their lower ends to the bearing locations (13 ;8) of the prepressing roller (3) and of the pressing roller (4) and which are arranged at their upper ends for sliding movement to the casing (5) of the feeder device (1),
**characterised in that**
a) a compression spring (18), which is already under a slight prestress, engages each bearing location (13) of the prepressing roller (3) in its lowest position and a second compression spring (19) is arranged for producing a common roller force only from a somewhat raised position of the prepressing roller (3),
b) only one compression spring (28), which in its lowest position is likewise under a slight prestress and of which the roller force is distinctly lower than the common roller force exerted upon the bearing locations (13) of the prepressing roller (3), engages each bearing location (8) of the pressing roller (4),

2. A spring system in accordance with claim 1, **characterised in that** the compression spring (18) which engages each bearing location (13) of the prepressing roller (3) in its lowest position and is already under a small prestress is formed as an external spring, into which the second compression spring (19) formed as an internal spring is inserted for producing the common roller force, in which both compression springs (18 ;19) are arranged concentrically around the guide rod (23).

3. A spring system in accordance with claims 1 and 2, **characterised in that** the external spring has a direction of coiling opposite to that of the internal spring.

4. A spring system in accordance with claims 1 to 3, **characterised in that** the lower ends of the external spring and of the internal spring abut mutually on a spring base (20) on the bearing location (13) of the prepressing roller (3) close to the central axis of its shaft (24) and where in the lowest position of the prepressing roller (3) the external spring with its upper end already abuts on the upper edge of the casing (5) of the feeder device (1) and the upper end of the internal spring exhibits a space up to the upper edge of the casing (5) which serves also as an abutment for it.

5. A spring system in accordance with claims 1 to 4, **characterised in that** the lower stops for limiting the position of the prepressing roller (3) and of the pressing roller (4) in their lowest position are formed from stop plates (29) attached to the guide rods (23 ;27), which with interposition of rubber buffers (30) fit closely from above on the upper edge of the casing (5) of the feeder device (1).

6. A spring system in accordance with claims 1 to 4, **characterised in that** the upper stops for limiting the position of the prepressing roller (3) and of the pressing roller (4) in their uppermost position are formed from a stop shoulder (29) on the guide rods (23 ;27), which fit closely from below on the centering discs (25) under the upper edge of the casing (5) of the feeder device (1).

7. A spring system in accordance with claim 1, **characterised in that** the pressing roller (4) with its bearing locations (8) is held in the front end of the oscillating crank (9), which with its rear ends carried on pivot bolts (10) attached on the casing (5) of the feeder device (1) so that it can pivot, and that on both sides of the shaft (11) of the pressing roller (4) a connecting rod (12) is supported by its rear end, in the front ends of which are the bearing locations (13) for the prepressing roller (3), in which the connecting rod (12) is free to move relative to the oscillating crank (9) only within a limited angular range, in which a short formed part (14) on the oscillating crank (9) engages in a longer recess (15) in the connecting rod (12).

## Revendications

1. Système de ressorts pour les cylindres d'alimentation supérieurs de récolteuses-hacheuses, en particulier dans un dispositif d'alimentation sur une récolteuse-hacheuse automotrice,
• comprenant au moins un cylindre de précompression (3) et un cylindre de compression (4), qui sont installés à l'opposé de deux cylindres d'alimentation inférieurs (6 ; 7) fixés dans un boîtier (5) du dispositif d'alimentation (1) de telle sorte qu'une distance peut être modifiée,
• dans lequel le cylindre de précompression (3) et le cylindre de compression (4) dotés d'un ensemble de ressorts de pression, dont les extrémités supérieures butent sur le boîtier (5) du dispositif d'alimentation (1) et une extrémité inférieure des ressorts de pression bute sur les points d'encastrement (13 ; 8) du cylindre de précompression (3) et du cylindre de compression (4), sont comprimés dans le sens des cylindres d'alimentation inférieurs (6 ; 7),
• sur lesquels les ressorts de pression sont disposés de manière concentrique autour des bras oscillants (23 ; 27), qui, au niveau de leurs extrémités inférieures, sont connectés aux points d'encastrement (13,8) du cylindre de précompression (3) et du cylindre de compression (4) et sont fixés, au niveau de leurs extrémités supérieures, au boîtier (5) du dispositif d'alimentation (1) de manière à pouvoir glisser librement,
**caractérisé en ce que** :
a) le ressort de pression (18), qui est déjà soumis à une légère prétension, qui engage chaque point d'encastrement (13) du cylindre de précompression (3) dans sa position la plus basse, et uniquement à partir d'une position quelque peu relevée du cylindre de précompression (3), un second ressort de pression (19) qui est disposé pour produire une force de roulement commune ; et
b) un seul ressort de compression (28) qui engage chaque point d'encastrement (8) du cylindre de compression (4), et qui, dans sa position la plus basse, est également soumis à une légère prétension, sa force de roulement étant plus faible que la force de roulement commune exercée sur les points d'encastrement (13) du cylindre de précompression (3).

2. Système de ressorts selon la revendication 1, **caractérisé en ce que** le ressort de pression (18) qui engage un point d'encastrement (13) du cylindre de précompression (3) dans sa position la plus basse et est déjà soumis à une légère prétension, est formé comme un ressort externe, dans lequel le second ressort de pression (19) formé comme ressort interne est introduit pour produire la force de roulement commune, dans lequel les deux ressorts de pression (18 ;19) sont disposés de manière concentrique autour d'un bras oscillant (23).

3. Système de ressorts selon les revendications 1 et 2, **caractérisé en ce que** le ressort externe présente un sens de bobinage opposé à celui du ressort interne.

4. Système de ressorts selon les revendications 1 à 3, **caractérisé en ce que** les extrémités inférieures du ressort externe et du ressort interne butent mutuellement sur une base de ressort (20) sur le point d'encastrement (13) du cylindre de précompression (3) proches de l'axe central de son arbre (24) et où, dans la position la plus basse du cylindre de précompression (3), le ressort externe bute déjà, au niveau de son extrémité supérieure, sur le bord supérieur du boîtier (5) du dispositif d'alimentation (1) et l'extrémité supérieure du ressort interne présente un espace jusqu'à un bord supérieur du boîtier (5) qui sert également de butée pour lui.

5. Système de ressorts selon les revendications 1 à 4, **caractérisé en ce que** les butées inférieures qui maintiennent la position du cylindre de précompression (3) et du cylindre de compression (4) dans leur position la plus basse sont formés à partir d'un ensemble de plaques de butée (29) fixées aux bras oscillants (23 ; 27), qui, en interposant un ensemble de tampons en caoutchouc (30), correspondent exactement à partir du dessus au bord supérieur du boîtier (5) du dispositif d'alimentation (1).

6. Système de ressorts selon les revendications 1 à 4, **caractérisé en ce que** les butées supérieures qui maintiennent le cylindre de précompression (3) et le cylindre de compression (4) dans leur position la plus haute sont formés à partir d'un rebord de butée (29) sur les bras oscillants (23 ; 27), qui correspondent exactement par le dessous aux disques de centrage (25) sous le bord supérieur du boîtier (5) du dispositif d'alimentation (1).

7. Système de ressorts selon la revendication 1, **caractérisé en ce que** le cylindre de compression (4) doté de points d'encastrement (8) est tenu à l'extrémité avant de manivelles oscillantes (9), avec leurs extrémités arrière reposent sur des axes de pivot (10) fixés sur le boîtier (5) du dispositif d'alimentation (1) de manière à pouvoir pivoter, des deux côtés de l'arbre (11) du cylindre de compression (4), une bielle étant supportée par son extrémité arrière ; au niveau de ses extrémités arrière se trouvent les points d'encastrement (13) du cylindre de précompression (3), dans lesquels la bielle (12) est libre de se déplacer par rapport à la manivelle oscillante (9) uniquement dans un domaine angulaire limité, dans lequel une petite pièce de forme (14) sur la manivelle oscillante (9) s'introduit dans un évidement (15) plus long dans la bielle (12).
